# EUROPEAN PATENT APPLICATION

(11) **EP 2 724 610 A1**
(43) Date of publication of application: **30.04.2014**
(21) Application number: 13190381.7
(22) Date of filing: 25.10.2013
(51) Int. Cl.: A01G 9/14, B66F 11/04

(54) **Tube rail cart / tower wagon**

(30) Priority: 26.10.2012 BE 201200731
(71) Applicant: B&A Automation BVBA, 2320 Hoogstraten (BE)
(72) Inventor: Bogaerts, Joris, 2960 Brecht (BE)
(74) Representative: Van hunsel, Lieven M.S.

(57) **Abstract**

Tube rail cart (1) or tower wagon which is provided with a platform (5) around which is provided a fall arrest (8) reaching up to an appropriate height above the platform (5), whereby the fall arrest is provided with a first gate (10A) and with a second gate (10B).

## Description

The present invention concerns a tube rail cart or another tower wagon.

The present description refers in particular to a tube rail cart, but the invention equally well concerns other tower wagons, in particular when they are intended to be used in narrow passageways or paths.

More specifically, the present invention concerns among others such a tube rail cart designed to ride over tubes in a horticultural greenhouse, which tubes serve as rails, whereby the tube rail cart is provided with a platform on which a person can stand, with drive means for advancing the tube rail cart over the tubes and with control means with which a person can control the drive means.

Such tube rail carts are already known according to the present state of the art and they are used in horticulture to move caretakers through the horticultural greenhouse, for example to check the growth of the plants in the greenhouse and to take care of the plants, or to harvest plants or fruits and to convey these harvested plants or fruits.

The tubes over which such tube rail carts ride hereby consist of a pair of heating tubes which, just as the rails of a railway vehicle, run parallel through the greenhouse.

In the known tube rail carts, the drive means consist of an electric engine powered by a battery and the operating means generally consist of one or several switching means, for example of a switch that can be switched between moving forward and moving backward, a control knob for the variable speed control of the tube rail cart, an emergency stop switch and so on.

Around the platform is usually provided a fall arrest system in the shape of guide rails or so-called railings.

In order to provide access to the platform, such railings are equipped with a lockable gate or door, usually at one of the narrow or end sides of the platform.

The problem we face is that the corridor between the rows of plants is narrow and that making a passage on the ground between a tube rail cart and the plants is often undesirable.

However, the tube rail cart often takes almost the full width of the corridor.

It is clear that making such a passage between the tube rail cart and the plants is inevitable in practice.

The platform of the conventional tube rail carts is optimally used by providing the control means on one of the end narrow sides of the platform.

Also, the control means are usually provided on the railing on the narrow end side opposite the previously mentioned gate.

Thus, the width in the central part of the platform is not encumbered.

The present invention aims to remedy the above-mentioned and other disadvantages of the known tube rail carts or tower wagons.

To this end, the invention concerns a tube rail cart or tower wagon which is provided with a predominantly rectangular platform on which a person can stand, with two long sides and two short sides, and whereby the tube rail cart is provided with a fall arrest, for example in the shape of guide rails or a so-called railing, reaching up to an appropriate height above the platform, whereby the fall arrest is provided with a first gate at a first short side of the platform, and with a second gate at the opposite second short side of the platform.

The advantage which is thus obtained is that a user of the tube rail cart or tower wagon according to the invention may enter or descend the tube rail cart or tower wagon via both end sides, or even, when he/she is on ground level, can simply walk over the tube rail cart or tower wagon via the first and second gate.

By the end side of a tube rail cart or tower wagon is meant the side towards which the short side of the platform is directed.

Thus is prevented that a passage is made between the tube rail cart or another tower wagon and the plants.

According to a preferred embodiment, the tube rail cart or tower wagon is provided with control means with which a person can control among others the progress over the rails and/or the height of the platform, which control means are provided on the first and/or second gate.

Thus is prevented that the useable width on the platform is encumbered by the control means.

According to a following special embodiment, the fall arrest, for example in the shape of guide rails or a so-called railing, consists of essentially upright structures on either longitudinal side of the platform, further called longitudinal structures.

Optionally, these longitudinal structures reach partly beyond the long sides and take the corner as well to provide for the fall arrest along a part of the short sides of the platform as well, i.e. the end sides of the tube rail cart or tower wagon.

Each gate is preferably hingeably connected to one of the longitudinal structures in order to reach up to the opposite longitudinal structure in a closed position.

Any wiring or piping between control means and drives and/or controllers preferably runs through cooperating, mating hollow tubes which form the hinge.

According to a preferred embodiment, the tube rail cart or tower wagon is provided with a scissor lift system, and the scissor lift profiles which reach up to the platform are shorter than the other scissor lift profiles.

This special embodiment makes it possible to mutually connect the longitudinal structures on the bottom of the platform, i.e. on the side opposite the operating side on which a person can stand, in order to provide a strong, rigid structure.

Indeed, due to the structural interruption of the fall arrest on both short sides of the platform, there is need for additional reinforcement just above or just under the platform.

Preferably, this reinforcement is provided on the bottom of the platform, where it is less disturbing to the user.

The reinforcement may for example consist of tubular profiles which connect both longitudinal structures, preferably near the short sides of the platform.

As the scissor lift profiles which reach up to the platform are shorter than the other scissor lift profiles, they can connect to the platform at a distance from the short sides of the platform, such that space is provided there for the above-mentioned reinforcement.

In order to better explain the characteristics of the invention, the following preferred embodiment of a tube rail cart according to the invention is described by way of example only, without being limitative in any way, with reference to the accompanying drawings, in which:
figures 1 and 2 show a tube rail cart according to the invention in perspective, represented in different operating positions;

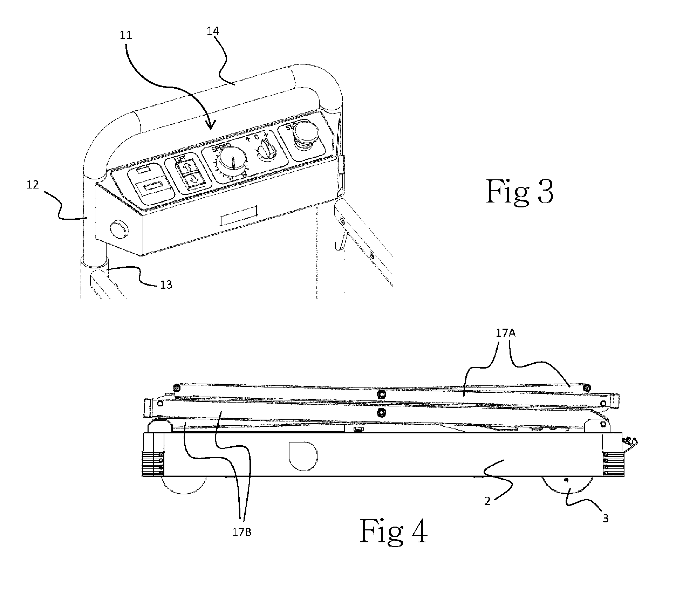

figure 3 shows the part indicated in figure 1 by arrow F1 in more detail and on a larger scale;
figure 4 is a side view of the tube rail cart according to figure 1, but in which the superstructure is omitted.

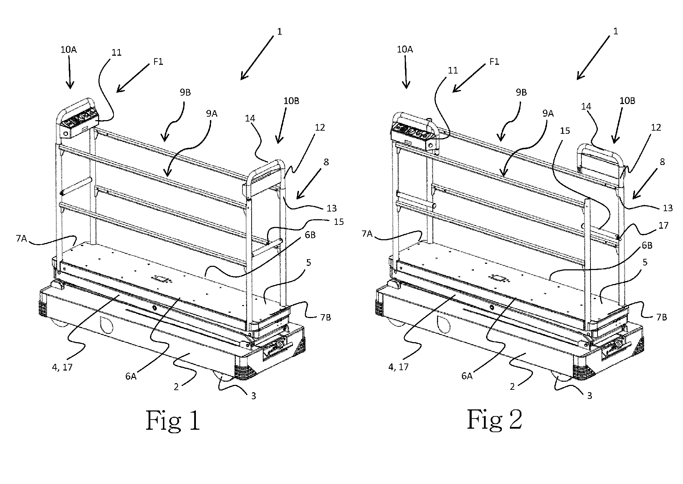

Figures 1 and 2 show a tube rail cart 1 according to the invention in different operating positions.

The tube rail cart 1 is provided with a frame 2 with wheels 3 and a drive and control unit, which are not represented.

On the frame 2 is provided a scissor lift system 4 and on top of that a predominantly rectangular platform 5 on which a person can stand, with two long sides 6A and 6B and two short sides 7A and 7B.

The tube rail cart 1 is provided with a fall arrest 8, here in the shape of guide rails or a so-called railing, which reaches up to body height of an average person above the platform 5.

More specifically, the fall arrest mainly consists here of upright structures 9A and 9B on both long sides 6A and 6B of the platform 5, called longitudinal structures 9A and 9B.

The fall arrest 8 is provided with a first gate 10A at a first short side 7A of the platform 5, and with a second gate 10B at the opposite second short side 7B of the platform 5.

The tube rail cart 1 is provided with control means 11 with which a person can control among others the progress of the tube rail cart 1 over the rails and/or the height of the platform 5.

The control means 11 are provided on the first gate 10A in this case.

The longitudinal structures 9A and 9B reach up to a restricted distance from the short sides 7A and 7B here.

Every gate 10 is hingeably connected to one of the longitudinal structures 9 in this case.

Any wiring and/or piping between the control means 11 and the drives and/or controllers run through cooperating, mating hollow tubes which form the hinges.

Every gate 10 is essentially built up of a vertical tube part 12 which is fitted and hinge-mounted in a likewise vertical tube part 13 of the longitudinal structure 9 to which the gate 10 is hinge-mounted, and further of two horizontally disposed brackets 14 and 15, connected to the vertical tube part 12 in this case.

In order to connect the bracket 15 located at the bottom to the tube part 12, the tube part 13 is provided with an appropriate passage 16 which is not made horizontal in this case but sloping when closed.

As usual, the scissor lift system 4 is constructed from scissor lift profiles 17.

However, a special characteristic is that the scissor lift profiles 17A which reach up to the platform 5 are shorter than the other scissor lift profiles 17B.

Although not shown in the figures, it should be noted that at the bottom of the platform 5 and near each of the short sides 7A and 7B is provided a tubular profile which connects both longitudinal structures 9A and 9B there.

The operation of the tube rail cart 1 according to the invention is simple and as follows.

Thanks to the presence of the two gates 10A and 10B, a user of the tube rail cart 1 according to the invention may choose to enter or descend the tube rail cart 1 via the end side, or even anyone standing on the ground when the tube rail cart 1 is put in a low operating position can simply walk over the tube rail cart 1 via the first and second gate 10A and 10B.

Thus is prevented that a passage is made between the tube rail cart 1 and the plants.

By providing the control means 11 on a gate 10A, any encumbrance of the useable width on the platform 5 by the control means 11 is prevented.

The special embodiment of the gates 10, and in particular the tube-in-tube hinges, prevent any damage to the pipes or cables.

When closed, the structure of the fall arrest 8 is additionally reinforced thanks to the coupled cooperation between the freely movable end of the gate 10 and the longitudinal structure 9 to which the latter connects.

As the passage 16 slopes when closed, the gate 10 is lifted when opened.

De scissor lift profiles 17A which reach up to the platform 5 are made shorter than the other scissor lift profiles 17B.

This particular embodiment makes it possible to mutually connect the longitudinal structures 9A and 9B on the bottom of the platform 5, i.e. on the side opposite the operational side on which a person can stand, so as to offer a strong, rigid structure.

As the other scissor lift profiles 17B are still made longer, the extension height of the tube rail cart 1 is not significantly encumbered.

It is clear that the special characteristics of the tube rail cart 1 as discussed and as represented in the figures can also be applied to other tower wagons, particularly useful when they are intended to be used in narrow corridors or pathways.

It should be noted that, entirely independently of any other characteristics and generally applicable to mobile structures, the frame 2 is provided with specific bumpers.

They are not only elastically compressible in the direction transverse to the main orientation of the bumpers, but they are also elastically compressible in the direction parallel to the main orientation of the bumpers, which main orientation corresponds in this case to the direction of the short or end sides of the tube rail cart 1.

Also, the bumpers reach laterally past the longitudinal or long sides of the frame 2, which is made somewhat larger than the platform 5 but mainly corresponds therewith in shape.

The advantage is that when an obstacle is hit diagonally, the bumper will be quickly compressed and usually in accordance with the force vector exerted by the obstacle. This compression is electronically registered or measured and the drive will be immediately adjusted, for example stopped. This prevents damage in case of angled or side collisions.

The invention is by no means restricted to the embodiment of a tube rail cart 1 according to the invention, described by way of example and represented in the accompanying drawings; on the contrary, such a tube rail cart 1 according to the invention can be made in many other ways while still remaining within the scope of the invention.

## Claims

1. Tube rail cart (1) or tower wagon which is provided with a predominantly rectangular platform (5) on which a person can stand, with two long sides (6A,6B) and two short sides (7A,7B), and whereby the tube rail cart (1) is provided with a fall arrest (8), for example in the shape of guide rails or a so-called railing, which reaches up to an appropriate height above the platform (5), whereby the fall arrest is provided with a first gate (10A) at a first short side (7A) of the platform (5), and with a second gate (10B) at the opposite second short side (7B) of the platform (5).

2. Tube rail cart (1) or tower wagon according to claim 1, **characterised in that** the tube rail cart (1) or tower wagon is provided with control means (11) with which a person can control among others the progress of the tube rail cart (1) or tower wagon and/or the height of the platform (5), which control means (11) are provided on the first gate (10A) and/or on the second gate (10B).

3. Tube rail cart (1) or tower wagon according to claim 1 or 2, **characterised in that** the fall arrest (8), for example in the shape of guide rails or a so-called railing, is mainly formed of upright longitudinal structures (9A,9B) on both long sides (6A,6B) of the platform (5).

4. Tube rail cart (1) or tower wagon according to claim 3, **characterised in that** a gate (10A,10B) is hingeably connected to one of the longitudinal structures (9A,9B), so as to reach up to the opposite longitudinal structure (9B,9A) in a closed position.

5. Tube rail cart (1) or tower wagon according to claim 2, **characterised in that** between the gate (10A,10B) on which the control means (11) are provided and the fixed part of the fall arrest (8) on which the gate (10A,10B) is provided, there is a hinge, and **in that** any possible wiring or pipes between the control means (11) and drives and/or controllers are fed through cooperating mating hollow tubes (12,13), which tubes (12,13) form the hinge.

6. Tube rail cart (1) or tower wagon according to one or several preceding claims, **characterised in that** a gate (10A,10B) is mainly built up of a predominantly vertical tube part (12) which is concentrically provided and hinge-mounted in or around a likewise predominantly vertical tube part (13) of the fall arrest (8) to which the gate (10A,10B) is hinge-mounted, and further of one or several predominantly horizontal or slanting brackets (14,15) connected to the vertical tube part (12).

7. Tube rail cart (1) or tower wagon according to claim 6, **characterised in that**, in case tube part (12) is concentrically provided and hinge-mounted in tube part (13) so as to connect a bracket (14,15) to tube part (12), tube part (13) will be provided with a passage (16).

8. Tube rail cart (1) or tower wagon according to claim 7, **characterised in that** the passage (16) is not made horizontal but sloping when closed.

9. Tube rail cart (1) or tower wagon according to one or several preceding claims, **characterised in that** the tube rail cart (1) or tower wagon is provided with a scissor lift system (4), whereby the scissor lift profiles (17A) reaching up to the platform (5) are shorter than the other scissor lift profiles (17B).

10. Tube rail cart (1) or tower wagon according to claims 4 and 9, **characterised in that** the opposite longitudinal structures (9A,9B) on the bottom of the platform (5) and near or at the position of both short sides (7A,7B) of the platform (5) are mutually connected by means of a mechanical connection, whereby the scissor lift profiles (17A) reaching up to the platform (5) and which are shorter than the other scissor lift profiles (17B) are directly or indirectly connected to the platform (5) at the side of the aforesaid mechanical connections directed towards the centre of the platform (5).
